# EUROPÄISCHE PATENTSCHRIFT

(11) **EP 2 705 942 B1**
(45) Veröffentlichungstag und Bekanntmachung des Hinweises auf die Patenterteilung: **18.01.2017**
(21) Anmeldenummer: 13178347.4
(22) Anmeldetag: 29.07.2013
(51) Int. Cl.: B29C 67/00

(54) **Verfahren und Vorrichtung zur Herstellung dreidimensionaler Objekte mit freitragenden und/oder überhängenden Teilen**
Method and device for fabricating three dimensional objects with self-supporting and/or overhanging parts
Procédé et dispositif pour la fabrication d'objets tridimensionnels dotés de parties non soutenues et/ou en surplomb

(30) Priorität: 05.09.2012 DE 102012215749
(43) Veröffentlichungstag der Anmeldung: 12.03.2014
(73) Patentinhaber: ROBERT BOSCH GMBH, 70442 Stuttgart (DE)
(72) Erfinder: Winkler, Thomas, 70565 Stuttgart (DE); Marx, Klaus, 70563 Stuttgart (DE); Hoffmann, Ulli, 75223 Niefern-Oeschelbronn (DE); Petereit, Steffen, 71691 Freiberg A. N. (DE); Platzer, Joachim, 71686 Remseck-Hochberg (DE); Hans, Tobias, 70469 Stuttgart-Feuerbach (DE); Schoenleber, Richard, 70329 Stuttgart (DE)

(56) Entgegenhaltungen:
- WO-A1-2005/070657
- WO-A1-2008/118263
- WO-A2-2012/103005
- DE-A1- 19 544 662
- US-A1- 2011 282 482

## Beschreibung

### Stand der Technik

Die Erfindung betrifft ein Verfahren zur Herstellung dreidimensionaler Objekte mit freitragenden und/oder überhängenden Teilen, wobei das Material in einem flüssigen Zustand aus einem Extruder extrudiert wird und beim Auftreffen auf einer Basisplatte oder einer darunter liegenden Materialschicht verfestigt wird, wobei das Material mit dem Material der gegebenenfalls darunter liegenden Schicht verbunden wird und das Material nach einem vorgegebenen Muster schichtweise platziert wird. Des Weiteren betrifft die Erfindung eine Vorrichtung und ein Computerprogramm zur Durchführung des Verfahrens.

Zur raschen Herstellung von Prototypen (Rapid-Prototyping) oder der Herstellung von Kleinserien beziehungsweise Einzelstücken eines Bauteils sind aus dem Stand der Technik verschiedene Verfahren bekannt. Diese Verfahren basieren beispielsweise auf dem Verfestigen eines Pulvers mit einem Härter, wobei der Härter in einem vom herzustellenden Objekt abhängigen Muster auf dem Pulver aufgetragen wird. Ein weiteres Verfahren ist das Lasersintern bei dem nach einem vorgegebenen Muster Metallpulver durch Aufschmelzen mit einem Laser in der gewünschten Form verfestigt wird.

Aus US 5,121,329 A ist ein Verfahren bekannt, bei dem ein Material, welches bei Abkühlung aushärtet, wie beispielsweise Kunststoff oder Wachs, schichtweise auf einer Basisplatte platziert wird, um ein vorgegebenes Objekt herzustellen. Das herzustellende Objekt wird mit Hilfe einer CAD-Software (computer-aided design) entworfen. Eine weitere Software generiert aus dem vorgegebenen Objekt Steuersignale, die die Bewegung eines Abgabekopfs relativ zu einer Basisplatte und die Materialabgabe steuern. Der Abgabekopf wird dabei so bewegt, dass dieser schichtweise Material platziert, wobei die jeweils vorherige Schicht die Unterlage für die folgende Schicht darstellt. Die Dicke einer Schicht wird durch den Abstand des Abgabekopfs zur vorherigen Schicht vorgegeben. Zur raschen Aushärtung des Materials nach dem Verlassen des Abgabekopfes wird dieses entweder mit Hilfe von Ultraschall unterhalb der Verfestigungstemperatur abgegeben oder direkt nach Austritt aus dem Abgabekopf mit Hilfe von Druckluft gekühlt.

Nachteilig an den zuvor genannten Verfahren ist, dass die notwendigen Apparaturen sehr teuer sind und daher einem industriellen Einsatz vorbehalten bleiben.

Seit kurzem sind auch für Privatanwender preisgünstige Rapid-Prototyping Systeme erhältlich, sogenannte 3D-Drucker, mit denen mit geringem Aufwand beliebige Kunststoffteile gedruckt werden können. Solche 3D-Drucker sind zum Beispiel von der Firma Makerbot Industries, LLC (Brooklyn, NY USA) oder von der Firma 3D-Systems, Incorporated (USA) erhältlich. In diesen 3D-Druckern wird Strangkunststoff in einem Extruder aufgeschmolzen und durch eine Düse gepresst. Dabei verlässt der Kunststoff die Düse in Form eines dünnen Kunststofffadens und wird auf einer Basisplatte platziert. Nach einer gewissen Zeit kühlt das so aufgebrachte Material wieder ab und erstarrt. Durch entsprechendes Verfahren des Extruders relativ zur Basisplatte kann so mit dem entstandenen dünnen Kunststofffaden Schicht für Schicht eine beliebige Form aufgebaut werden. Der Extruder wird dazu nach einem Muster relativ zur Basisplatte bewegt, welches von einem Computer anhand einer Objektvorlage generiert wird.

Nachteilig ist jedoch, dass keine freitragenden Strukturen wie beispielsweise Brücken oder Balkone aufgebaut werden können, da der flüssige Kunststofffaden nach Austritt aus der Düse herunter tropft. Zudem können überhängende Bereiche, wie sie entstehen wenn sich nach oben verbreiternde Formen (beispielsweise eine Schüssel) hergestellt werden sollen, nur bis zu einem bestimmten Neigungswinkel hergestellt werden.

Aus DE 195 24 013 A1 ist ein Verfahren und eine Vorrichtung zum Herstellen von dreidimensionalen Objekten bekannt, wobei die Objekte überhängende Teile haben, welche im Raum frei aufgehängt sind, ohne dass irgendwelches Material des Objekts in direkter, abstützender Berührung damit in der endgültigen Geometrie des Objekts ist. Das Objekt wird dabei durch Abgeben eines Materials, welches nach Verlassen des Abgabekopfes aushärtet, schichtweise hergestellt, wobei unterhalb der überhängenden Teile ein Traggebilde hergestellt wird. An der Grenzfläche zwischen dem Traggebilde und dem Objekt wird eine schwache Verbindung durch die Verwendung eines anderen Grenzflächenmaterials gebildet, durch die nach Fertigstellung des Objekts das Traggebilde leicht entfernt werden kann. Nachteilig an dem genannten Verfahren ist, dass nach Fertigstellung des Objekts ein weiterer Bearbeitungsschritt, nämlich das Entfernen des Traggebildes, durchgeführt werden muss. Zudem sind die preiswerten 3D-Drucker nicht in der Lage, ein zusätzliches Grenzflächenmaterial auszugeben.

Die US 2011/0282482 betrifft eine Vorrichtung zur Herstellung dreidimensionaler Objekte welche lokale Kühlungsmittel umfasst.

### Offenbarung der Erfindung

Erfindungsgemäß wird ein Verfahren zur Herstellung dreidimensionaler Objekte mit freitragenden und/oder überhängenden Teilen vorgeschlagen, wobei das Material in einem flüssigen Zustand aus einem Extruder extrudiert wird und beim Auftreffen auf einer Basisplatte oder einer darunter liegenden Materialschicht verfestigt wird, wobei das Material mit dem Material der gegebenenfalls darunter liegenden Schicht verbunden wird und das Material nach einem vorgegebenen Muster schichtweise platziert wird, wobei in dem Muster, nach dem das Material platziert wird, freitragende und/oder überhängende Teile ermittelt werden und für diese Teile zusätzlich folgende Schritte ausgeführt werden:
a) Ermitteln von Bereichen im Muster, in denen in der darunter liegenden Schicht Material platziert wurde,
b) Beginnen der Platzierung des Materials in einem in Schritt a) ermittelten Bereich,
c) Extrudieren des Materials gemäß dem vorgegebenen Muster,
wobei bei dem Extrudieren des Materials gemäß Schritt c) das extrudierte Material lokal im Bereich um eine Extruderdüse des Extruders gekühlt und damit verfestigt wird.

Beim thermischen Kunststoffdruck wird Material in Form eines geschmolzenen Fadens aus einer Düse extrudiert. Um daraus ein Objekt herzustellen, muss das geschmolzene Fadenmaterial zunächst nach einem vorgegebenen Muster auf einer Basisplatte abgelegt werden. Da der Faden noch heiß ist, verbindet er sich mit dem Untergrund, so dass er fixiert wird. Dabei kühlt der Faden ab und erstarrt, so dass er seine Form behält. Die Dicke der platzierten Materialschicht ist dabei abhängig vom Abstand der Extruderdüse zur Basisplatte. Nachdem alles Material nach dem vorgegebenen Muster in einer Schicht platziert wurde, wird der Abstand zwischen der Düse und der Basisplatte vergrößert und mit dem Platzieren der nächsten Schicht begonnen. Wiederum wird das extrudierte Material nach einem vorgegebenen Muster platziert, wobei das noch heiße frische Material mit der darunterliegenden Schicht verschmilzt. Nach und nach beziehungsweise Schicht für Schicht entsteht nach dem vorgegebenen Muster das gewünschte Objekt.

Das Muster, nach dem das Material platziert wird, wird von einem Computer aus der mit einer CAD-Software entworfenen Vorlage abgeleitet. Das Muster legt fest, wie der Extruder, mit dem das Material extrudiert und damit abgegeben wird, relativ zur Basisplatte beziehungsweise zur darunter liegenden Materialschicht bewegt wird, und wie viel Material an welcher Stelle abgegeben wird.

Um zuverlässig freitragende und/oder überhängende Teile eines Objekts herstellen zu können, werden diese Teile in dem Muster, nach dem das Material platziert wird, ermittelt. Ein freitragender Teil in dem Muster ist ein Teil, bei dem in der darunter liegenden Schicht kein Material platziert worden ist. Ein überhängender Teil in dem Muster ist ein Teil, bei dem der neu extrudierte geschmolzene Faden nur eine Auflagefläche in der darunter liegenden Schicht hat, deren Breite kleiner ist, als der halbe Durchmesser des extrudierten Fadenmaterials.

Nachdem in dem Muster ein freitragender und/oder überhängender Teil ermittelt wurde, wird ein geeigneter Startpunkt zum Beginnen des Platzierens des neuen Materials ermittelt. Dazu werden zunächst gemäß Schritt a) Bereiche gesucht, in denen in der darunter liegenden Schicht Material platziert wurde. Anschließend wird gemäß Schritt b) der Startpunkt für die Platzierung des Materials in diesen soeben ermittelten Bereich gelegt. Dadurch wird erreicht, dass das extrudierte Fadenmaterial einen Anknüpfungspunkt vorfindet, an dem es mit dem Untergrund verschmelzen kann. Ohne einen solchen Anknüpfungspunkt würde das Fadenmaterial durch die Schwerkraft nach unten gezogen werden und keinerlei Halt finden. Im letzten Schritt c) des Verfahrens wird das Material in Form eines Fadens extrudiert und gemäß dem vorgegebenen Muster platziert. Dabei wird das extrudierte Material lokal im Bereich um den Extruder gekühlt und damit verfestigt, um eine Verformung des Materials aufgrund der Einwirkung der Schwerkraft zu verhindern.

In einer bevorzugten Ausführungsform des Verfahrens wird der gekühlte lokale Bereich um den Extruder so gewählt, dass das bereits platzierte Material nicht weiter abgekühlt wird.

Eine zu rasche und/oder zu starke Abkühlung des noch in Herstellung befindlichen dreidimensionalen Objekts ist unerwünscht. Zum einen darf das bereits platzierte Material nicht zu kalt sein, damit frisch extrudiertes Fadenmaterial sich gut durch Verschmelzen mit der darunter liegenden Schicht verbinden kann. Ein zu rasches Abkühlen des Objekts würde diese Verbindung schwächen, wodurch das hergestellte Objekt brüchig wird.

Zum anderen kommt es bei einem raschen Abkühlen des Objekts zu Spannungen zwischen den einzelnen platzierten Schichten, wodurch sich die Form des Objekts ändern kann. Zudem können Verspannungen in dem Objekt zu Brüchen führen, wodurch sich Teile des Objekts lösen können. Um diesen Verspannungen entgegen zu wirken, ist es bevorzugt, die Basisplatte, auf der das Material platziert wird, zu heizen. Des Weiteren ist es denkbar, das gesamte Volumen des 3D-Druckers, in dem das Objekt hergestellt wird, zu erwärmen. Eine generelle ungerichtete Abkühlung des Objekts während der Herstellung ist demnach unerwünscht.

In einer bevorzugten Ausführungsform des Verfahrens wird der gekühlte lokale Bereich um den Extruder so gewählt, dass er einen Windstromdurchmesser von weniger als 10 mm aufweist. Bevorzugt beträgt der Windstromdurchmesser zwischen 3 mm und 10 mm. Der Windstromdurchmesser ist der Bereich, der von einem kühlenden Luftstrom eines Gebläses erfasst wird.

Nach dem Platzieren der ersten Materialschicht in einem freitragenden und/oder überhängenden Teil des Objekts kann es beim Platzieren der nächsten darüber liegenden Schichten zu einer Überhitzung und damit zu einer unerwünschten Verformung aufgrund einer Erweichung des Materials kommen. Daher wird in einer bevorzugten Ausführungsform des Verfahrens beim Platzieren von weiterem Material in einem Bereich, unter dem ein freitragender und/oder ein überhängender Bereich liegt, das neu platzierte extrudierte Material ebenfalls lokal um den Extruder gekühlt.

In einer bevorzugten Ausführungsform des Verfahrens ist die Stärke der Kühlung des extrudierten Materials von der Anzahl der Schichten, die bereits über dem freitragenden und/oder überhängenden Bereich platziert wurden, abhängig und wird mit zunehmender Schichtanzahl reduziert.

Mit dem erfindungsgemäßen Verfahren ist es auch möglich, senkrechte Säulen aufzubauen. Dazu wird der Extruder während des Extrudierens senkrecht nach oben verfahren, während das extrudierte Material gekühlt wird. Wie nahe 2 Säulen beieinander angeordnet werden können bzw. wie hoch sie bei gegebenem Abstand ausgezogen werden können, ist von der Geometrie der Extruderdüse abhängig. Durch die Kühlung wird dabei erreicht, dass das extrudierte Material rasch erstarrt und sich nicht aufgrund von äußerer Einwirkung wie z.B. der Schwerkraft, verformt. Anschließend können, wie bereits beschrieben, in einer folgenden Schicht die Säulen miteinander verbunden werden. Auf diese Weise lassen sich Gitter, Kämme oder Siebe herstellen.
Bevorzugt wird in dem Verfahren ein thermoplastischer Kunststoff als extrudiertes Material eingesetzt.
Bevorzugte thermoplastische Kunststoffe sind beispielsweise Acrylnitril-Butadien-Styrol (ABS), Polylactide (PLA), Polypropylen (PP) oder Polyvinylchlorid (PVC).

Ein weiterer Aspekt der Erfindung ist es, eine Vorrichtung nach Anspruch 7 zur Herstellung dreidimensionaler Objekte bereit zu stellen. Die Vorrichtung zur Herstellung dreidimensionaler Objekte umfasst eine Basisplatte, auf der Material platziert werden kann, einen Extruder, der eingerichtet ist, ein Material zu extrudieren, Mittel, um die Basisplatte und den Extruder relativ zueinander in allen drei Raumrichtungen zu bewegen sowie ein Steuergerät, wobei entweder an einer Extruderdüse des Extruders ein Mikrogebläse angeordnet ist oder an der Extruderdüse des Extruders ein Luftauslass eines Mikrogebläses angeordnet ist und wobei das Steuergerät zur Steuerung des Mikrogebläses eingerichtet ist.
In einer bevorzugten Ausführungsform der Vorrichtung ist das Mikrogebläse so ausgeführt, dass der Windstromdurchmesser des Mikrogebläses kleiner als 10 mm ist. Bevorzugt liegt der Windstromdurchmesser des Mikrogebläses zwischen 3 mm und 10 mm.

Das Steuergerät ist eingerichtet, das zuvor beschriebene Verfahren auszuführen.
Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird.

Das Computerprogramm ist dabei eingerichtet, in einem Muster, nach dem ein Objekt hergestellt wird, freitragende und/oder überhängende Teile sowie Bereiche in denen in einer darunterliegenden Schicht Material platziert wurde zu ermitteln und ein Mikrogebläse zu steuern.

Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa auf einem Server zum Herunterladen bereit gestellt werden, z.B. über ein Datennetzwerk wie das Internet oder eine Kommunikationsverbindung wie etwa eine Telefonleitung oder eine drahtlose Verbindung.

### Vorteile der Erfindung

Durch das erfindungsgemäße Verfahren lassen sich dreidimensionale Objekte mit freitragenden und/oder überhängenden Teilen einfach mit preisgünstigen 3D-Druckern herstellen. Dabei sind keine großen Modifikationen erforderlich, die Vorrichtung muss lediglich mit einem Mikrogebläse nachgerüstet werden. Aufwändige Umbauten, wie sie das zusätzliche Abgeben von einem anderen Material zur Herstellung eines unterstützenden Tragwerks erfordern, sind nicht notwendig.

Dabei wirkt sich positiv aus, dass die erfindungsgemäß vorgeschlagene Kühlung des extrudierten Materials nur lokal und bei Bedarf erfolgt. Durch diese Maßnahme wird ein übermäßiges Abkühlen des in Herstellung befindlichen Objekts vermieden, was andernfalls zur Verformung des Objekts oder zu Brüchen in dem Material führen würde.

Das vorgeschlagene Mikrogebläse lässt sich aufgrund der geringen Größe an den existierenden Extrudern ohne großen Aufwand anbringen. Geeignete Mikrolüfter beziehungsweise Mikrogebläse sind z.B. die Microblower der Firma Murata, die DC Blower der Firma Risun Expanse Corp. Die DC Fans der Firma Sunon oder die MICRO-Lüfter der Firma SEPA GmbH. Diese Lüfter lassen sich leicht in der Nähe des Extruders anbringen, wobei über eine Kanüle der Luftstrom zu einem Luftauslass an der gewünschten Stelle geleitet werden kann. Die Einfachheit und der geringe Preis der 3D-Drucker bleiben dabei erhalten.

### Kurze Beschreibung der Zeichnungen

Ausführungsbeispiele der Erfindung sind in den Zeichnungen dargestellt und in der nachfolgenden Beschreibung näher erläutert.

Es zeigen:
Figur 1 eine perspektivische Ansicht eines 3D-Druckers,
Figur 2 die Herstellung eines freitragenden Teils eines Objekts unter Verwendung eines Mikrogebläses mit einer Kanüle,
Figur 3 die Herstellung eines freitragenden Teils eines Objekts bei direkter Verwendung eines Mikrogebläses,
Figuren 4a
   und 4 b die Herstellung von überhängenden Teilen eines Objekts.

### Ausführungsformen der Erfindung

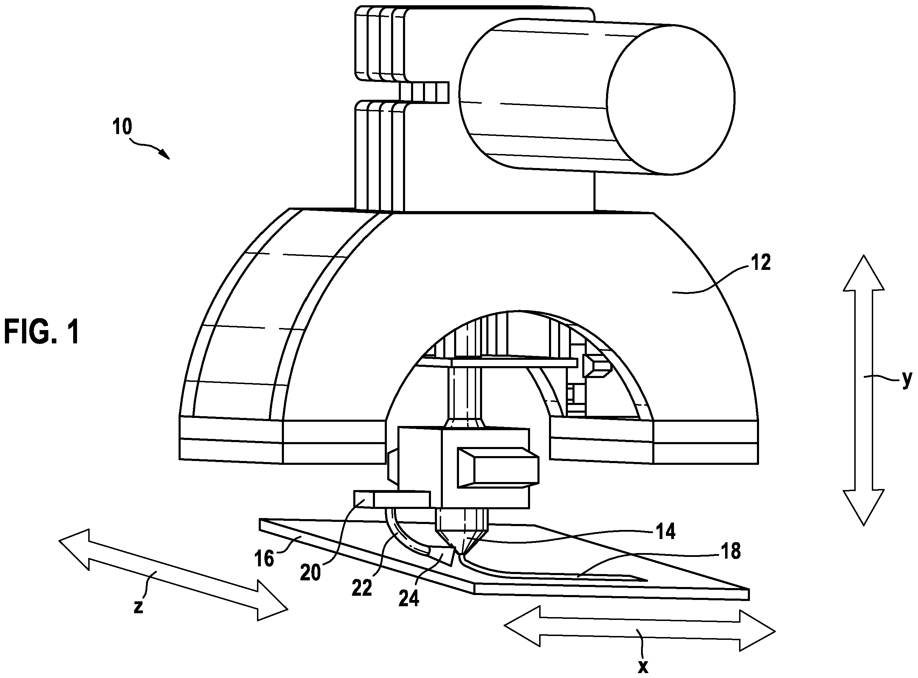

Figur 1 zeigt eine perspektivische Ansicht eines 3 D-Druckers.

Der 3D-Drucker 10 umfasst einen Extruder 12 und eine Basisplatte 16, die beweglich zueinander montiert sind. Die Basisplatte 16 lässt sich in der x-, z-Ebene bewegen, während der Extruder 12 in der y-Richtung beweglich ist. Zusammen ergibt sich daraus die Möglichkeit, den Extruder 12 relativ zur Basisplatte 16 in allen drei Raumrichtungen zu bewegen. In weiteren Ausführungsformen der Erfindung sind auch andere Aufteilungen der Bewegungsachsen denkbar. So kann beispielsweise der Extruder so ausgeführt sein, dass er in der x-, z-Ebene beweglich ist, wobei die Basisplatte entlang der y-Achse bewegt werden kann.

Der Extruder 12 umfasst eine Extruderdüse 14 aus dem ein thermoplastischer Kunststoff in Form eines Fadens 18 extrudiert wird. Beim Auftreffen des Fadens 18 auf der Basisplatte 16 entsteht eine Verbindung, durch die die Lage des extrudierten Fadens 18 fixiert wird.

Der Extruder 12 umfasst des Weiteren ein Mikrogebläse 20, dessen Luftstrom über eine Kanüle 22 und einen Luftauslass 24 zur Extruderdüse 14 geleitet wird. Das Mikrogebläse 20 kann je nach Kühlbedarf ein- oder ausgeschaltet werden.

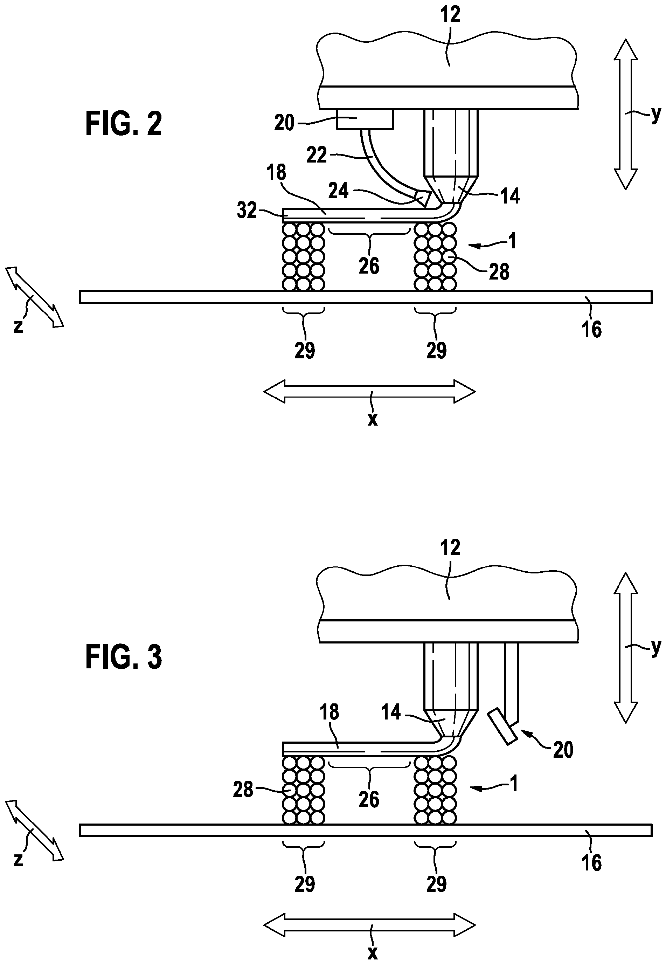

Figur 2 zeigt die Herstellung eines freitragenden Teils eines Objekts.

In der Figur 2 ist ein Extruder 12 dargestellt mit dem Material in Form eines extrudierten Fadens 18 abgegeben wird, während der Extruder 12 relativ zu einer Basisplatte 16 bewegt wird. In der in Figur 2 dargestellten Situation wurden zur Herstellung des Objekts 1 bereits fünf Schichten Material 28 platziert. Das bereits platzierte Material 28 wurde in Form von fünf Schichten abgegeben, wobei in jeder Schicht drei konzentrische Ringe platziert wurden. Diese sind in der Figur 2 in einem Schnitt dargestellt. Im Zentrum der drei konzentrischen Ringe des bereits platzierten Materials 28 befindet sich kein Material. Soll nun in der folgenden Schicht eine Deckfläche hergestellt werden, so wird der Teil der Deckfläche, der nicht direkt über dem bereits platzierten Baumaterial 28 platziert wird, als freitragender Teil 26 angesehen.

Gemäß Schritt a) des erfindungsgemäßen Verfahrens wird nun in der darunter liegenden Materialschicht nach Bereichen 29 mit bereits platziertem Material 28 gesucht. Im Schritt b) des Verfahrens wird mit der Platzierung des neuen Materials begonnen. Das extrudierte fadenförmige Material 18 wird beginnend am Punkt 32 platziert. Unterhalb des Punkts 32 befindet sich bereits platziertes Material 28 und das neu extrudierte Material verschmilzt mit diesem. Gemäß Schritt c) des Verfahrens wird das Extrudieren gemäß dem vorgegebenen Muster fortgesetzt, wobei das extrudierte Material 18 lokal im Bereich um den Extruder gekühlt und damit verfestigt wird. Dazu wird das Mikrogebläse 20 aktiviert und dessen Luftstrom erreicht über die Kanüle 22 und den Luftauslass 24 die Extruderdüse 14. Dadurch wird das extrudierte Material 18 gekühlt und sofort verfestigt, so dass es sich nicht aufgrund der Einwirkungen der Schwerkraft verformen kann. Des Weiteren ist es denkbar, die Geschwindigkeit, mit der das Material 18 abgeben wird und die Geschwindigkeit, mit der due Extruderdüse 14 bewegt wird, zu reduzieren, um dem Material ausreichend Zeit zum Erstarren zu geben. Die genaue Wahl der einzelnen Parameter hängt unter anderem von der Stärke des kühlenden Luftstroms und der Temperatur des extrudierten Materials 18 beim Verlassen der Extruderdüse 14 ab.

Nachdem der Extruder 12 das extrudierte Material über dem freitragenden Teil 26 platziert hat, erreicht dieser wieder einen Bereich 29, unter dem bereits platziertes Baumaterial 28 liegt. Hier wird die Kühlung wieder abgeschaltet, so dass sich das extrudierte Material 18 durch Verschmelzen wieder mit dem bereits platzierten Baumaterial 28 verbinden kann.

Figur 3 zeigt das Herstellen eines freitragenden Teils eines Objekts, wobei der Bereich um den Extruder direkt mit einem Mikrogebläse gekühlt wird.

In Figur 3 ist wieder ein Extruder 12 dargestellt, der in allen drei Raumrichtungen gegenüber einer Basisplatte 16 beweglich ist. Wie bereits in Figur 2 beschrieben, soll auf dem bereits extrudiertem Material 28, welches in fünf Schichten mit jeweils drei konzentrischen Ringen platziert worden ist, eine Deckfläche hergestellt werden. Dabei wird wie zur Figur 2 beschrieben verfahren, jedoch wird der Bereich um die Düse 14 des Extruders 12 direkt, das heißt ohne die Verwendung einer Kanüle, durch ein Mikrogebläse 20 gekühlt. Bevorzugt wird hierzu ein Radialgebläse mit konzentriertem Luftaustritt verwendet.

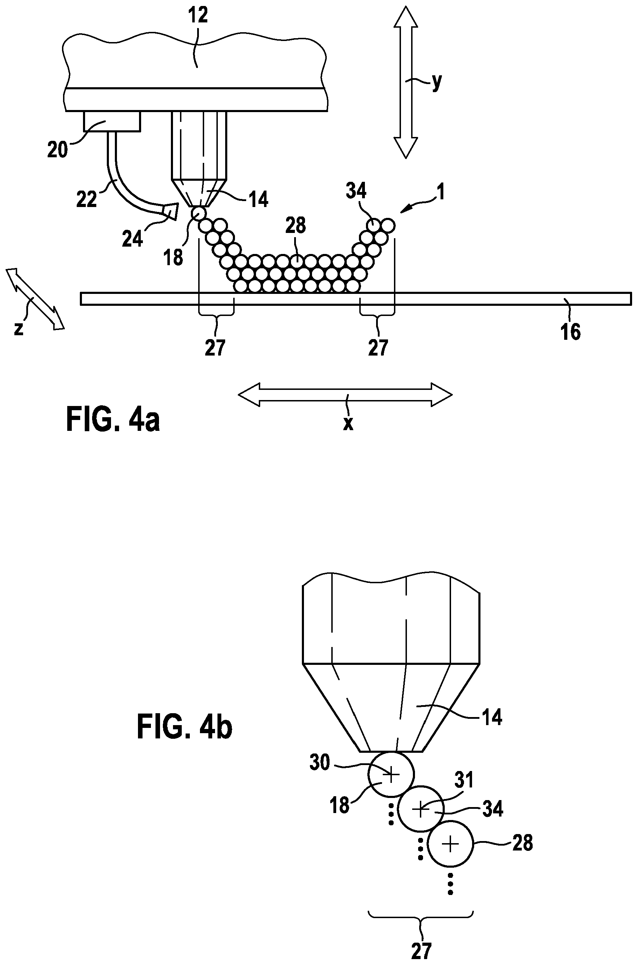

Figuren 4a und b zeigen das Herstellen eines überhängenden Teils eines Objekts.

In Figur 4a ist ein Extruder 12 dargestellt, der sich relativ zu einer Basisplatte 16 in allen drei Raumrichtungen bewegen lässt. Das herzustellende Objekt 1 hat die Form einer Schüssel, wobei diese eine kreisförmige Bodenfläche aufweist und der Durchmesser der Schüssel nach oben hin zunimmt. In der in Figur 4a dargestellten Situation wurden bereits sechs Schichten Material 28 platziert und sind in Figur 4a als Schnitt dargestellt. Die unteren drei Schichten stellen dabei die Bodenfläche der Schüssel dar, während die oberen drei Schichten den bereits hergestellten Teil der Seitenwand bilden. Das Material 28 wurde dabei in Form von konzentrischen Ringen abgelegt und hat sich durch Verschmelzen miteinander verbunden.

Das Objekt 1 weist an der linken und der rechten Seite Teile 26 auf, in denen das extrudierte Material 28 nicht vollständig auf der darunter liegenden Schicht aufliegt. Die jeweils folgende Schicht ist überhängend über der darunter liegenden Schicht platziert. Bei der Platzierung von neuem Material in den überhängenden Teilen 26 des Objekts 1 tritt das Problem auf, dass das weiche, frisch extrudierte Material 18 an den überhängenden Kanten herunter tropft. Um dies zu verhindern, ist am Extruder 12 ein Mikrogebläse 20 angeordnet, dessen Luftstrom über die Kanüle 22 und den Luftauslass 24 die Extruderdüse 14 erreicht. Der extrudierte Faden 18 wird gekühlt und verfestigt, so dass dieser nicht durch die Schwerkraft nach unten gezogen werden kann.

In Figur 4b ist ein vergrößerter Ausschnitt um die Extruderdüse 14 dargestellt.

Wie in Figur 4b ersichtlich, liegt das von der Extruderdüse 14 extrudierte fadenförmige Material 18 nur mit einem kleinen Teil auf dem zuvor platzierten Material 28 auf. Der Mittelpunkt des frisch extrudierten Materials 18 ist dabei mit dem Bezugszeichen 30 versehen, während der Mittelpunkt eines Fadens in der darunter liegenden Schicht mit dem Bezugszeichen 31 versehen ist. Wie aus Figur 4b ersichtlich ist, liegt weniger als die Hälfte der Breite des extrudierten Fadens auf der darunter liegenden Schicht auf.

## Patentansprüche

1. Verfahren zur Herstellung dreidimensionaler Objekte (1) mit freitragenden und/oder überhängenden Teilen (26, 27), wobei das verwendete Material (18) in einem flüssigen Zustand aus einem Extruder (12) extrudiert wird und beim Auftreffen auf einer Basisplatte (16) oder einer darunterliegenden Materialschicht (34) verfestigt wird, wobei das Material (18) mit dem Material der gegebenenfalls darunterliegenden Schicht (34) verbunden wird und das Material (18) nach einem vorgegebenen Muster schichtweise platziert wird, **dadurch gekennzeichnet, dass** in dem Muster, nach dem das Material (18) platziert wird, freitragende und/oder überhängende Teile (26, 27) ermittelt werden und für diese Teile zusätzlich folgende Schritte ausgeführt werden:
a) Ermitteln von Bereichen (29) im Muster, in denen in der darunterliegenden Schicht Material platziert wurde,
b) Beginnen der Platzierung des Materials (18) in einem im Schritt a) ermittelten Bereich,
c) Extrudieren des Materials (18) gemäß dem vorgegebenen Muster, wobei bei dem Extrudieren des Materials (18) gemäß Schritt c) das extrudierte Material (18) lokal im Bereich um eine Extruderdüse (14) des Extruders (12) gekühlt und damit verfestigt wird.

2. Verfahren nach Anspruch 1, wobei der gekühlte lokale Bereich um den Extruder (14) einen Windstromdurchmesser von weniger als 10 mm aufweist.

3. Verfahren nach Anspruch 1 oder 2, **dadurch gekennzeichnet, dass** beim Platzieren von Material (18) in einem Bereich, unter dem ein freitragender und/oder überhängender Bereich (26, 27) liegt, das neu platzierte extrudierte Material (18) ebenfalls lokal um den Extruder (12) gekühlt wird.

4. Verfahren nach Anspruch 3, **dadurch gekennzeichnet, dass** die Stärke der Kühlung des extrudierten Materials (18) von der Anzahl der Schichten, die bereits über dem freitragenden und/oder überhängenden Bereich (26, 27) platziert wurden, abhängig ist und mit zunehmender Schichtanzahl reduziert wird.

5. Verfahren nach einem der Ansprüche 1 bis 4, **dadurch gekennzeichnet, dass** als Material (18) ein thermoplastischer Kunststoff verwendet wird.

6. Verfahren nach Anspruch 5, wobei als thermoplastischer Kunststoff Acrylnitril-Butadien-Styrol (ABS), Polylactide (PLA), Polypropylen (PP) oder Polyvinylchlorid (PVC) verwendet wird.

7. Vorrichtung zur Herstellung dreidimensionaler Objekte (1) umfassend einen Extruder (12) der eingerichtet ist, ein Material (18) zu extrudieren, und ein Steuergerät, **dadurch gekennzeichnet, dass** entweder an einer Extruderdüse (14) des Extruders (12) ein Mikrogebläse (20) angeordnet ist oder an der Extruderdüse (14) des Extruders (12) ein Luftauslass (24) eines Mikrogebläses (20) angeordnet ist und wobei das Steuergerät zur Steuerung des Mikrogebläses (20) und zur Ausführung des Verfahrens nach einem der Ansprüche 1 bis 6 eingerichtet ist.

8. Vorrichtung nach Anspruch 6, **dadurch gekennzeichnet, dass** der Windstromdurchmesser des Mikrogebläses (20) oder des Luftauslasses (24) kleiner als 10 mm ist.

9. Computerprogramm, welches eingerichtet ist, in einem Muster, nach dem ein Objekt (1) hergestellt wird, freitragende und/oder überhängende Teile (26, 27) sowie Bereiche in denen in einer darunterliegenden Schicht Material platziert wurde zu ermitteln und ein Mikrogebläse gemäß dem Verfahren nach einem der Ansprüche 1 bis 6 zu steuern, wenn es auf einem Computer abläuft.

## Claims

1. Method for fabricating three-dimensional objects (1) with self-supporting and/or overhanging parts (26, 27), wherein the material used (18) is extruded in a liquid state from an extruder (12) and solidified when it comes into contact with a base plate (16) or an underlying layer of material (34), wherein the material (18) is bonded with the material of the possibly underlying layer (34) and the material (18) is placed layer by layer on the basis of a predetermined pattern, **characterized in that** self-supporting and/or overhanging parts (26, 27) are determined in the pattern, on the basis of which the material (18) is placed, and the following steps are additionally carried out for these parts:
a) determining regions (29) in the pattern in which material has been placed in the underlying layer,
b) beginning the placement of the material (18) in a region determined in step a),
c) extruding the material (18) according to the predetermined pattern, wherein, during the extrusion of the material (18) according to step c), the extruded material (18) is locally cooled and thereby solidified in the region around an extruder die (14) of the extruder (12).

2. Method according to Claim 1, wherein the cooled local region around the extruder (14) has a windstream diameter of less than 10 mm.

3. Method according to Claim 1 or 2, **characterized in that**, during the placement of material (18) in a region under which a self-supporting and/or overhanging region (26, 27) lies, the newly placed extruded material (18) is likewise locally cooled around the extruder (12).

4. Method according to Claim 3, **characterized in that** the intensity of the cooling of the extruded material (18) is dependent on the number of layers that have already been placed over the self-supporting and/or overhanging region (26, 27) and is reduced as the number of layers increases.

5. Method according to one of Claims 1 to 4, **characterized in that** a thermoplastic is used as the material (18).

6. Method according to Claim 5, wherein acrylonitrilebutadiene-styrene (ABS), polylactide (PLA), polypropylene (PP) or polyvinylchloride (PVC) is used as the thermoplastic.

7. Device for fabricating three-dimensional objects (1) comprising an extruder (12), which is designed to extrude a material (18), and a control device, **characterized in that** either a microblower (20) is arranged at an extruder die (14) of the extruder (12) or an air outlet (24) of a microblower (20) is arranged at the extruder die (14) of the extruder (12) and wherein the control device is designed for controlling the microblower (20) and for carrying out the method according to one of Claims 1 to 6.

8. Device according to Claim 6, **characterized in that** the windstream diameter of the microblower (20) or of the air outlet (24) is less than 10 mm.

9. Computer program, which is designed to determine self-supporting and/or overhanging parts (26, 27) and regions in which material has been placed in an underlying layer in a pattern on the basis of which an object (1) is fabricated and to control a microblower according to the method according to one of Claims 1 to 6 when it is run on a computer.

## Revendications

1. Procédé de fabrication d'objets tridimensionnels (1) dotés de parties non soutenues et/ou en surplomb (26, 27), dans lequel on extrude à l'état liquide la matière utilisée (18) hors d'une extrudeuse (12) et on la solidifie lors de son arrivée sur une plaque de base (16) ou sur une couche de matière sous-jacente (34), dans lequel on assemble la matière (18) avec la matière de la couche éventuellement sous-jacente (34) et on place la matière (18) en couches selon un motif prédéterminé, **caractérisé en ce que** l'on détermine dans le motif, selon lequel la matière (18) est placée, des parties non soutenues et/ou en surplomb (26, 27) et on effectue pour ces parties les étapes suivantes:
a) déterminer des régions (29) dans le motif, dans lesquelles de la matière a été placée dans la couche sous-jacente,
b) commencer le placement de la matière (18) dans une région déterminée à l'étape a),
c) extruder la matière (18) selon le motif prédéterminé,
dans lequel, lors de l'extrusion de la matière (18) selon l'étape c), on refroidit la matière extrudée (18) localement dans la région située autour d'une buse d'extrudeuse (14) de l'extrudeuse (12) et de ce fait on la solidifie.

2. Procédé selon la revendication 1, dans lequel la région locale refroidie autour de l'extrudeuse (14) présente un diamètre de flux d'air de moins de 10 mm.

3. Procédé selon la revendication 1 ou 2, **caractérisé en ce que**, lors du placement de matière (18) dans une région sous laquelle se situe une région non soutenue et/ou en surplomb (26, 27), on refroidit également localement autour de l'extrudeuse (12) la matière extrudée nouvellement placée (18).

4. Procédé selon la revendication 3, **caractérisé en ce que** l'intensité du refroidissement de la matière extrudée (18) dépend du nombre des couches, qui ont déjà été placées au-dessus de la région non soutenue et/ou en surplomb (26, 27) et on la réduit lorsque le nombre de couches augmente.

5. Procédé selon l'une quelconque des revendications 1 à 4, **caractérisé en ce que** l'on utilise comme matière (18) une matière plastique thermoplastique.

6. Procédé selon la revendication 5, dans lequel on utilise comme matière plastique thermoplastique un acrylonitrile-butadiène-styrène (ABS), des polylactides (PLA), du polypropylène (PP) ou du chlorure de polyvinyle (PVC).

7. Dispositif pour la fabrication d'objets tridimensionnels (1), comprenant une extrudeuse (12), qui est conçue pour extruder une matière (18), et un appareil de commande, **caractérisé en ce que** soit une micro-soufflante (20) est disposée à une buse d'extrudeuse (14) de l'extrudeuse (12) soit une sortie d'air (24) d'une micro-soufflante (20) est disposée à la buse d'extrudeuse (14) de l'extrudeuse (12), et dans lequel l'appareil de commande est conçu pour commander la micro-soufflante (20) et pour exécuter le procédé selon l'une quelconque des revendications 1 à 6.

8. Dispositif selon la revendication 6, **caractérisé en ce que** le diamètre de flux d'air de la micro-soufflante (20) ou de la sortie d'air (24) est inférieur à 10 mm.

9. Programme informatique, qui est conçu pour déterminer dans un motif, selon lequel un objet (1) est fabriqué, des parties non soutenues et/ou en surplomb (26, 27) ainsi que des régions dans lesquelles de la matière a été placée dans une couche sous-jacente et pour commander une micro-soufflante par le procédé selon l'une quelconque des revendications 1 à 6, lorsqu'il est exécuté sur un ordinateur.
